# EUROPÄISCHE PATENTSCHRIFT

(11) **EP 2 562 519 B1**
(45) Veröffentlichungstag und Bekanntmachung des Hinweises auf die Patenterteilung: **19.02.2020**
(21) Anmeldenummer: 12180539.4
(22) Anmeldetag: 15.08.2012
(51) Int. Cl.: H01K 1/10, G01J 3/10, G01J 3/42, G01J 3/02

(54) **Strahlungsquelle**
Radiation source
Source de rayonnement

(30) Priorität: 25.08.2011 DE 102011081570
(43) Veröffentlichungstag der Anmeldung: 27.02.2013
(73) Patentinhaber: Innovative Sensor Technology IST AG, 9642 Ebnat-Kappel (CH)
(72) Erfinder: Holoubek, Jiri, 9630 Wattwil (CH); Thapliyal, Ratnesh, 8052 Oerlikon Zürich (CH); Bürgler, Thomas, 9620 Lichtensteig (CH); Krogmann, Florian, 9500 Wil (CH)
(74) Vertreter: Andres, Angelika Maria

(56) Entgegenhaltungen:
- WO-A1-01/82332
- DE-T2- 68 913 533
- FR-A1- 2 748 810
- US-A- 4 134 759

## Beschreibung

Die vorliegende Erfindung betrifft eine Strahlungsquelle zur Emission infraroter elektromagnetischer Strahlung, mit mindestens einem Quellelement. Insbesondere betrifft die Erfindung eine Infrarot-Strahlungsquelle zum Einsatz in einem Gassensor oder Gasanalysator bzw. Gasspektrometer.

In Gassensoren zur Messung eines bestimmten Gases oder Gasanalysatoren zur Bestimmung verschiedener Gase wird Infrarotstrahlung in ein definiertes Gasvolumen eingestrahlt und das Absorptionsspektrum aufgenommen. Jedes Gasmolekül besitzt ein charakteristisches Absorptionsverhalten, sodass aus dem Absorptionsspektrum die Zusammensetzung des Gases bestimmbar ist. Da es sich bei der Infrarotspektroskopie um ein nicht-invasives Verfahren handelt, stellt sie eine vielseitig angewandte Methode der chemischen Analyse dar. Einsatzgebiete sind beispielsweise die Pharmazeutische Analyse, Qualitätskontrolle in industriellen Prozessen, Umweltchemie, aber auch Geologie und Astronomie.

Als Infrarotstrahlungsquelle dient in der Regel ein thermischer Strahler, dessen Oberfläche auf entsprechend hohe Temperaturen erhitzt wird, um eine ausreichende Strahlungsintensität in dem gewünschten Wellenlängenbereich zu erzielen.

Ein sehr weit verbreiteter thermischer Strahler ist ein Nernststrahler. Weiterhin bekannt ist der so genannte Globar, ein Stab aus Siliziumcarbid, welcher an seinen Enden mit Elektroden versehen ist. Über die Elektroden wird Strom durch den Stab geleitet, wodurch dieser erhitzt wird und Strahlung vor allem im Infrarotbereich emittiert.

In der Patentschrift EP 0106431 B1 ist eine Infrarotstrahlungsquelle beschrieben, welche im Wesentlichen aus einem mit einem Heizdraht umwickelten Keramikstab besteht, wobei in dem Keramikstab ein Schwarzkörperhohlraum ausgebildet ist, welcher letztendlich die Infrarotstrahlung emittiert.

Ein Nachteil bei den erwähnten Strahlungsquellen ist darin zu sehen, dass eine für die Gasspektroskopie erforderliche Modulation der Strahlung auf Grund der großen thermischen Masse der Strahler nicht über die Modulation der Heizleistung erreichbar ist. Stattdessen kommen mechanische Elemente, wie beispielsweise Lochblenden, zum Einsatz. Diese benötigen viel Platz, sodass ein entsprechender Gassensor verhältnismäßig groß ausfällt.

Eine Alternative zu konstant beheizten Strahlungsquellen stellen Emitter auf Dünnfilmbasis dar, welche als leitfähige Schicht auf einem Substrat ausgestaltet sind. Über einen pulsierenden an die leitfähige Schicht angelegten Heizstrom ist ein Pulsieren der emittierten Strahlung erreichbar. Nachteilig bei diesen Strahlungsquellen ist der hohe Wärmeverlust, der durch die direkte Kontaktierung auf dem Substrat auftritt.

Ein Beispiel für eine Strahlungsquelle mit Schichtaufbau ist in der japanischen Offenlegungsschrift JP 03025880 A gezeigt. Offenbart ist ein Infrarotheizer zum Erhitzen eines Halbleiterwafers, welcher aus einer flächigen Basis, einer darauf aufgebrachten Isolationsschicht, und einer auf der Isolationsschicht aufgebrachten Heizschicht aufgebaut ist. Vorteilhafte Materialien für die Infrarotstrahlung emittierende Isolationsschicht sind Keramiken wie Aluminiumoxid, Zirkonoxid, Siliziumcarbid und Diamant.

Eine weitere Gruppe von Strahlungsquellen stellen Glühwendel aus einem geeigneten Metall oder einer Metalllegierung, beispielsweise Platin, Wolfram, oder Nickel-Chrom dar. Ein Beispiel aus dieser Gruppe ist in der US-Patentschrift US 7,122,815 B2 zu finden. Diese sind zwar mit pulsierendem Heizstrom betreibbar, besitzen aber dennoch eine hohe thermische Masse, was einen hohen Leistungsverbrauch mit sich bringt und darüber hinaus eine Kühlung erforderlich macht. Die thermische Masse ist zwar verringerbar, indem die Glühwendel entsprechend dünn ausgeführt wird; dies bringt jedoch den Nachteil mit sich, dass die Glühwendel eine geringe mechanische Stabilität aufweist. Weiterhin kann beispielsweise ein Wolframdraht nur in einer sauerstofffreien Atmosphäre betrieben werden, was dessen Einbringen in ein mit einem Schutzgas befülltes Gehäuse erfordert. Ein Gehäuse, beispielsweise aus Glas, verringert jedoch die Intensität der Strahlung.

Die FR 2 748 810 A1 offenbart eine modulierbare IR-Strahlungsquelle, bestehend aus Mikrofilamenten aus Platin, welche mit Siliziumcarbid beschichtet sind.

Die US 4 134 759 A offenbart Leichtmetall-Verbundstoffe, welche Fasern aus Siliziumcarbid umfassen, wobei die Fasern eine Platinbeschichtung aufweisen. Die WO 01/82332 A1 offenbart eine Entladungslampe. An der Innenseite der Röhre der Entladungslampe ist eine Faser aus Siliziumcarbid angebracht, welche mit einer Platinschicht ummantelt ist.

Die Aufgabe der Erfindung besteht darin, eine modulierbare Quelle infraroter Strahlung bereit zu stellen, welche eine niedrige Leistungsaufnahme und eine hohe thermische Stabilität besitzt.

Die Aufgabe wird durch die Strahlungsquelle nach Anspruch 1 gelöst.

Beim Anlegen einer Spannung an die metallische Beschichtung fließt ein Strom durch die Beschichtung, welcher diese auf eine über die angelegte Spannung vorgebbare Temperatur erwärmt. Die metallische Beschichtung dient als Heizelement für die Siliziumcarbid-Faser, sodass diese auf die für die Emission infraroter Strahlung erforderliche Temperatur gebracht werden kann. Das Quellelement wird somit nicht selbst von einem Heizstrom durchflossen, sondern über die Beschichtung indirekt beheizt. Durch Modulation der Heizleistung ist die emittierte Strahlung ebenfalls modulierbar. Das Quellelement sendet immer dann Strahlung im infraroten Spektralbereich aus, wenn es auf Grund der Erhitzung über die metallische Beschichtung die hierfür erforderliche Temperatur aufweist. Auf Grund des geringen Durchmessers der Faser ist die thermische Masse des Quellelements ebenfalls gering, sodass eine hohe Modulationstiefe erzielt wird. Die mindestens eine Siliziumcarbid-Faser ist nicht nur mechanisch stabil, sondern besitzt auch eine sehr gute Emissivität.

Erfindungsgemäß besteht die metallische Beschichtung aus Platin oder einer Platinlegierung. Insbesondere handelt es sich um eine Legierung mit Iridium, Rhodium, Zirkon, oder einem Metall der Seltenen Erden. Das Metall der Seltenen Erden ist vorzugsweise Yttrium. Die metallische Beschichtung kann direkt auf das Quellelement aufgebracht sein, oder auf eine zuvor darauf aufgebrachte haftvermittelnde Zwischenschicht, welche beispielsweise aus einer Platin-Chrom-oder Platin-Titan-Legierung besteht.

Erfindungsgemäß ist das Quellelement mit seinen Endbereichen jeweils an einem Halterungselement befestigt und in ein Gehäuse eingebracht. In diesem Fall dient kein Substrat als Halterung, sondern zwei Halterungselemente, beispielsweise starre Drähte, welche in ein Gehäuse eingebracht sind. Bei dem Gehäuse handelt es sich beispielsweise um metallisches Transistorgehäuse, vorzugsweise ein TO-Transistorgehäuse.

Erfindungsgemäß bestehen die Halterungselemente aus einem elektrisch leitfähigen Material und sind derart ausgestaltet, dass die metallische Beschichtung des Quellelements über die Halterungselemente über die an die Halterungselemente angeschlossene Spannungsquelle mit einer elektrischen Spannung beaufschlagbar ist. Die Halterungselemente sind beispielsweise als Drähte ausgestaltet, an welchen das Quellelement mittels Lot befestigbar ist. Die Beaufschlagung der metallischen Beschichtung mit Spannung erfolgt dann über die mit der Spannungsquelle verbundenen Drähte.

In einer ersten Ausgestaltung der erfindungsgemäßen Lösung weist die Faser aus Siliziumcarbid einen Durchmesser unterhalb 300 Mikrometer, vorzugsweise unterhalb 150 Mikrometer, insbesondere zwischen 50 und 150 Mikrometer, auf.

Bei einer weiteren Ausgestaltung der Erfindung weist die metallische Beschichtung eine Dicke zwischen 300 und 1800 Nanometer auf.

Eine Weiterbildung der erfindungsgemäßen Strahlungsquelle ist darin zu sehen, dass das Quellelement auf ein Substrat aufgebracht ist. Das Quellelement ist beispielsweise mittels Lötpunkten oder Hochtemperaturbeständigen Glasfixierungen über die beiden Endbereiche des Quellelements auf dem Substrat fixiert. Vorzugsweise stellen die Fixierpunkte die einzigen Kontaktpunkte zwischen Quellelement und Substrat dar. Auf dem Substrat sind auch mehrere Quellelement nebeneinander anordenbar. Hierdurch lässt sich ein Flächenstrahler realisieren.

Gemäß einer Ausgestaltung weist das Substrat mindestens eine durchgängige Ausnehmung auf und das Quellelement ist zumindest abschnittsweise oberhalb der Ausnehmung angeordnet, sodass das Quellelement zumindest durch die Ausnehmung hindurch Strahlung emittiert.

In einer Ausgestaltung der Erfindung ist die metallische Beschichtung einseitig auf das Quellelement aufgebracht, sodass ein entlang einer Mantellinie verlaufender Abschnitt des Quellelements frei von der Beschichtung ist. In erster Linie dient dann die unbeschichtete Fläche der Abstrahlung der Infrarot-Strahlung. Das Quellelement ist dementsprechend derart auf dem Substrat aufgebracht oder an den Halterungselementen befestigt, dass die beschichtungsfreie Seite in die gewünschte Abstrahlrichtung weist.

Weiter wird die der Erfindung zugrunde liegende Aufgabe gelöst durch ein Verfahren zur Herstellung der Strahlungsquelle nach Anspruch 7.

In einem Verfahren könnte das Quellelement, d.h. die Siliziumcarbid-Faser, einseitig beschichtet werden. Ist das noch unbeschichtete Quellelement auf dem Substrat befestigt, kann dessen von dem Substrat abgewandte Rückseite besonders einfach beschichtet werden. Indem auch das Substrat beschichtet wird, kann die Kontaktierung des Quellelements direkt über das Substrat erfolgen, sofern die Beschichtung auf dem Substrat zumindest eine Unterbrechung aufweist, welche die mit den beiden Endbereichen des Quellelements in Kontakt stehenden Substratabschnitte elektrisch voneinander trennt.

Weiterhin umfasst die Erfindung einen Gassensor zur Analyse eines Gasgemisches und/oder Erfassung eines oder mehrerer Gase, welcher mindestens eine Strahlungsquelle nach einer oder mehreren der vorangehenden Ausgestaltungen aufweist. Mittels des Gassensors ist beispielsweise ein Gas auf seine Zusammensetzung hin untersuchbar oder ein bestimmtes Gas detektierbar. In einer Ausgestaltung ist der Gassensor dazu ausgestaltet, mindestens eines der Gase Kohlendioxid, Ethanol, Ammoniak und Methan zu detektieren oder quantitativ zu erfassen. Der Gassensor kann jedoch auch für andere Gase eingesetzt werden. Gassensoren mit Strahlungsquellen zur Emission von Infrarotstrahlung sind aus dem Stand der Technik bekannt, sodass hier nicht näher auf deren Funktionsweise eingegangen wird.

Die erfindungsgemäße Strahlungsquelle mit einer oder mehreren Siliziumcarbid-Fasern als Quellelement bietet eine Reihe an Vorteilen. Zum einen besitzt das Quellelement über einen weiten Wellenlängenbereich im Infraroten Spektrum eine hohe Emissivität. Zum anderen ist die Strahlungsemission über die als Widerstandsheizung ausgebildete metallische Beschichtung elektrisch modulierbar. Hierdurch entfallen mechanische Modulatoren, was zu einem kompakteren und kostengünstigeren Aufbau der Strahlungsquelle führt. Auf Grund der geringen thermischen Masse besitzt das Quellelement eine schnelle Ansprechzeit, sodass eine schnelle Modulation bei hoher Modulationstiefe ermöglicht ist. Darüber hinaus sind die Leistungsaufnahme gering und die Effizienz hoch, was die Strahlungsquelle kosten- und energieeffizient macht. Auch ein Kühlen des Quellelements ist auf Grund der geringen Leistungsaufnahme nicht erforderlich. Weiterhin besitzt die Strahlungsquelle auch bei hohen Temperaturen eine lange Lebensdauer und ein über lange Zeit stabiles Emissionsspektrum. Im Gegensatz zu einem Wolframdraht kann eine SiC-Faser in beliebiger sauerstoffhaltiger Umgebung betrieben werden.

Das beschichtete Quellelement kann in einer großen Vielzahl an Varianten auf Träger oder Halterungen aufgebracht und in verschiedenartige Gehäuse eingebracht werden, sodass für jede Anwendung ein passendes Design möglich ist. Da Siliziumcarbid unter normaler Atmosphäre beständig ist, ist ein Einbringen in eine evakuierte oder mit Schutzgas befüllte Hülse nicht erforderlich. Für bestimmte Anwendungen, bei welchen ein bestimmtes Umgebungsgas beispielsweise zur Filterung bestimmter Wellenlängen vorteilhaft ist, ist ein Einkapseln jedoch möglich.

Die Erfindung wird anhand der nachfolgenden Figuren näher erläutert. Gleiche Teile sind hierbei durch gleiche Bezugszeichen gekennzeichnet. Es zeigen jeweils in schematischen Darstellungen:
- Fig. 1a-d: verschiedene Ausgestaltungen eines beschichteten Quellelements;
- Fig. 2: eine Strahlungsquelle mit einem Transistorgehäuse;
- Fig. 3a-d: verschiedene Ausgestaltungen von auf einem Substrat aufgebrachten Quellelementen.

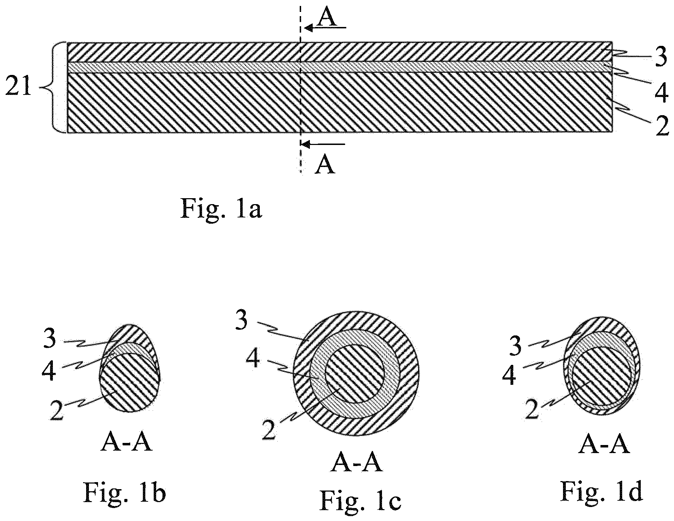

In Fig. 1a ist der Aufbau eines beschichteten Quellelements 21 schematisch an Hand eines Schnitts entlang einer die Längsachse des Quellelements 2 beinhaltenden Ebene dargestellt. Das die Infrarotstrahlung emittierende Quellelement 2 ist eine Faser aus Siliziumcarbid. Unter einer Faser ist hierbei ein sehr dünnes Element zu verstehen, dessen Länge den Durchmesser um mehrere Größenordnungen übersteigt. Der Durchmesser des Quellelements 2 ist möglichst gering und liegt beispielsweise zwischen 50 und 300 Mikrometer, vorzugsweise zwischen 50 und 150 Mikrometer.

Das Quellelement 2 weist zwei Beschichtungen 3, 4 auf, wobei es sich bei der äußeren Beschichtung um eine metallische Beschichtung 3 handelt, welche als Heizelement fungiert und sich daher durch einen hohen elektrischen Widerstand auszeichnet. Die unter der metallischen Beschichtung 3 angeordnete Zwischenschicht 4 ist eine haftvermittelnde Schicht, welche zu einer verbesserten Haftung der metallischen Beschichtung 3 auf der Siliziumcarbid-Faser führt. Die Zwischenschicht 4 kann auch entfallen. Die metallische Beschichtung 3 besteht vorzugsweise aus Platin oder einer Platinlegierung, beispielsweise aus Platin-Iridium, Platin-Rhodium, oder Platin-Zirkon. Ebenfalls geeignet sind Legierungen aus Platin und einem Metall der Seltenen Erden, insbesondere Yttrium. Die genannten Legierungen besitzen auch bei hohen Temperaturen eine hohe Stabilität. Die Dicke der metallischen Beschichtung 3 beträgt beispielsweise 800 nm. Allgemein liegt deren Dicke vorzugsweise zwischen 300 und 2000 Nanometer, besonders bevorzugt bei 500 bis 900 Nanometer.

Die haftvermittelnde Zwischenschicht 4 enthält entsprechend der metallischen Beschichtung 3 ebenfalls Platin. Beispielsweise handelt es sich um eine Platin-Chrom oder Platin-Titan-Legierung. Prinzipiell sind jedoch beliebige Materialien mit haftvermittelnder Wirkung einsetzbar. Die Schichtdicke der Zwischenschicht 4 beträgt vorzugsweise etwa 40 - 150 Nanometer, insbesondere ca. 40 Nanometer.

Die metallische Beschichtung 3, sowie die Zwischenschicht 4, sind in der in Fig. 1a dargestellten Ausführungsform nur einseitig auf das Quellelement 2 aufgebracht. Die Beschichtungen 3, 4 können das Quellelement 2 jedoch auch vollständig umgeben, wobei die Dicke der Beschichtungen 3, 4 jeweils homogen sein kann oder variiert. Diese beiden Fälle sind beispielhaft in den Fig. 1c und 1d dargestellt, welche eine Schnittdarstellung des beschichteten Quellelements 21 in einer senkrecht zu der Längsachse des Quellelements 2 verlaufenden Ebene A-A zeigen. Fig. 1b zeigt eine entsprechende Schnittdarstellung der in Fig. 1a gezeigten Ausführungsform.

Fig. 1c illustriert den Fall, dass die Beschichtung 3 einseitig aufgebracht ist, sodass ein Abschnitt des Quellelements 2, welcher entlang einer Mantellinie verläuft, frei von der Beschichtung 3 ist.

In der in Fig. 1d dargestellten Ausführungsform ist ungefähr eine Hälfte der Mantelfläche des Quellelements 2 mit einer sehr dünnen metallischen Beschichtung 3 versehen, während die andere Hälfte eine dickere Beschichtung 3 aufweist. Der dünne Teil der Beschichtung 3 dient dann in erster Linie als Schutz des Quellelements 2 vor Korrosion oder Beschädigung der Oberfläche, während der dicke Teil der Beschichtung 3 vornehmlich die Funktion der Beheizung des Quellelements 2 übernimmt.

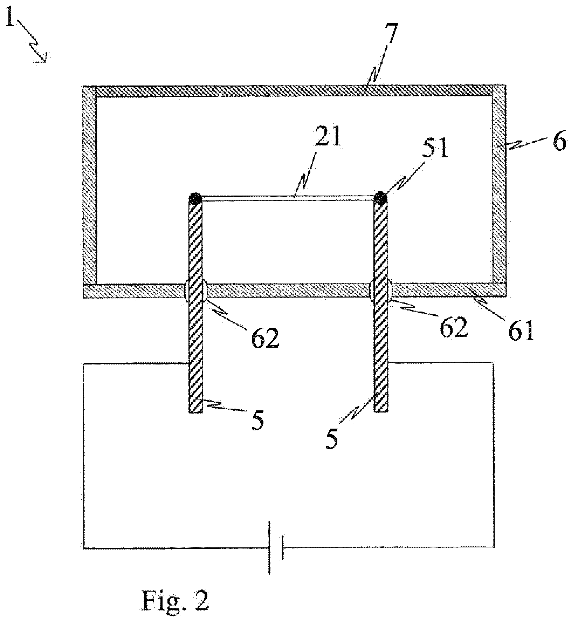

Fig. 2 offenbart eine Ausgestaltung einer Strahlungsquelle 1 für einen Gassensor, bei welcher das beschichtete Quellelement 21 in einem Transistorgehäuse befestigt ist. Bei dem Transistorgehäuse handelt es sich um ein gängiges metallisches TO-Gehäuse. Die Verwendung derartiger Gehäuse für Infrarot-Strahlungsquellen mit einem Wolframdraht ist beispielsweise aus der US-Patentschrift US 7122815 B2 bekannt. Als Halterungselemente für das beschichtete Quellelement 21 dienen zwei Anschlussstifte 5. Die Anschlussstifte 5 reichen durch eine Basisplatte 61 hindurch in ein kreiszylindrisches metallisches Kopfteil 6. Die Durchführungen sind hierbei mit Glas oder einem anderen isolierenden Material 62 verschlossen und gegenüber der Basisplatte 61 elektrisch isoliert.

Das Transistorgehäuse ist mit einem Transmissionsfenster 7 verschlossen, durch welches die von dem Quellelement 2 emittierte Strahlung austritt, während das Transistorgehäuse selbst opak für die Strahlung ist. Das Material des Transmissionsfensters 7 ist auf die Wellenlängen der emittierten Strahlung abgestimmt. Beispielsweise sind Saphir, CaF₂, BaF₂, ZnSe, oder mit einer Anti-Reflexionsschicht beschichtetes Silizium für die Transmission infraroter Strahlung geeignet.

Die Anschlussstifte 5 und die Endbereiche des beschichteten Quellelements 21 sind über Lötpunkte 51 miteinander verbunden. Hierdurch wird neben der mechanischen Verbindung auch eine elektrisch leitfähige Verbindung zwischen den Anschlussstiften 5 und der metallischen Beschichtung 3 des Quellelements 2 geschaffen. Über eine an die Anschlussstifte 5 angeschlossene Spannungsquelle ist eine Spannung an die metallische Beschichtung 3 anlegbar. Letztere erwärmt sich entsprechend der angelegten Spannung bzw. der Heizleistung auf eine bestimmte Temperatur, wodurch sich auch das Quellelement 2 entsprechend erwärmt. Die Temperatur des Quellelements 2 wird derart eingestellt, dass es vornehmlich elektromagnetische Strahlung in einem vorgegebenen Wellenlängenbereich emittiert. Für den Einsatz in einem Gasspektrometer ist dies Infrarotstrahlung, insbesondere Strahlung im nahen und mittleren Infrarotbereich mit Wellenlängen vorzugsweise zwischen 1 und 5 Mikrometer bzw. zwischen 7 und 20 Mikrometer.

Das Quellelement 2 kann auch pulsartig Strahlung emittieren, wenn die Heizleistung bzw. die Amplitude der angelegten Spannung pulsiert. Die angelegte Spannung kann hierbei eine Wechselspannung oder auch eine Wechselspannung mit Gleichspannungsanteil sein. Die Signalform der Spannung ist beliebig wählbar und kann symmetrischer oder asymmetrischer Gestalt sein. Beispielsweise wird eine Rechteck-, Dreieck-, oder Sägezahnspannung, oder eine sinusförmige Spannung angelegt. Auch eine Variation der Frequenz zur Leistungskontrolle ist möglich.

Durch die Ausgestaltung des Quellelements 2 als Faser besitzt es eine sehr geringe thermische Masse, sodass das Quellelement 2 schnell auf eine Änderung der Heiztemperatur reagiert und die abgestrahlte Infrarotstrahlung auch bei relativ hohen Frequenzen eine hohe Modulationstiefe aufweist. Relativ hoch bedeutet in diesem Zusammenhang bereits mehr als ein paar Hertz, beispielsweise 10-20 Hz. Bei einer geringeren Modulationstiefe ist auch eine Modulation mit höheren Frequenzen, beispielsweise 50 Hz oder mehr möglich. Eine Modulation der emittierten Strahlung ermöglicht die Unterdrückung von Störsignalen beim Einsatz der Strahlungsquelle 1 in einem Infrarotspektrometer. Durch die Modulation über die angelegte Spannung entfallen Mittel für eine mechanische Modulation der Strahlung, wie beispielsweise Lochblenden, was diesen Aufbau einer Strahlungsquelle 1 kompakt und kostengünstig macht.

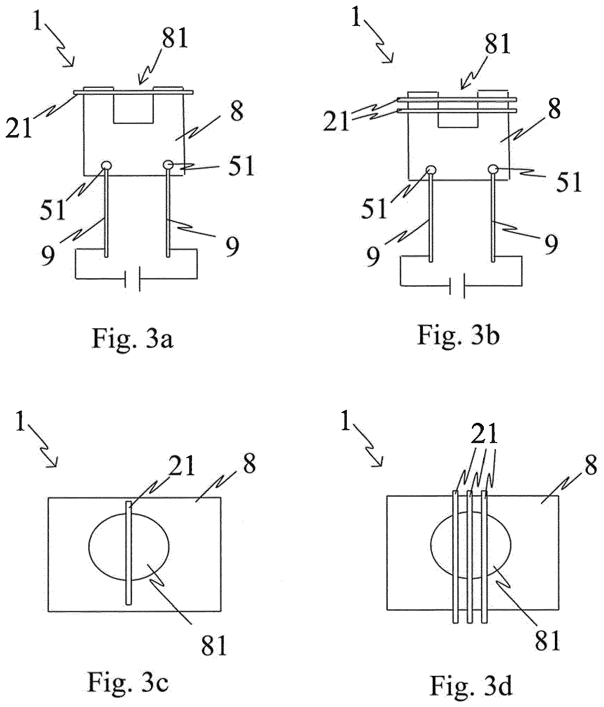

Fig. 3a-d zeigen beispielhaft verschiedene Ausgestaltungen eines Substrats 8 mit einem oder mehreren aufgebrachten Quellelementen 2 in einer schematischen Draufsicht. Bei dem Substrat 8 handelt es sich beispielsweise um ein Aluminiumoxid-oder Zirkonoxid-Substrat 8.

Gemäß der in Fig. 3a dargestellten Ausführungsform ist ein Quellelement 2 auf einem quadratischen Substrat 8 aufgebracht. Das Quellelement 2 ist hierbei derart angeordnet, dass es abschnittsweise über einer Ausnehmung 81 in dem Substrat 8 liegt. An Stelle der einen Ausnehmung 81 können auch mehrere Ausnehmungen gleicher oder verschiedener Form und Größe in das Substrat 8 eingebracht sein. Diese können wie gezeigt als Einkerbung oder auch zentral im Substrat 8 ausgeführt sein. Über die Ausnehmung 81 erfolgt die Abstrahlung der vom Quellelement 2 erzeugten Strahlung. Der Einbau der Strahlungsquelle 1 in einen Sensor erfolgt daher entsprechend derart, dass diejenige Substratseite, auf welcher sich das Quellelement 2 befindet, von dem zu bestrahlenden Objekt abgewandt ist. Die Verbindung zwischen dem Quellelement 2 und dem Substrat 8 ist beispielsweise über Klebestellen oder mittels Glasfixierungen hergestellt, wobei die Fixierungen hochtemperaturbeständig sind.

Die Kontaktierung des beschichteten Quellelements 21 erfolgt direkt über das Substrat 8. Hierzu ist das Substrat 8 zumindest in zwei Abschnitten, welche jeweils mit einer Kontaktstelle zu dem beschichteten Quellelement 21 in Verbindung stehen, mit einer elektrisch leitfähigen Beschichtung versehen. Die beiden Abschnitte können als Leiterbahnen ausgeführt oder flächig sein; wichtig ist nur, dass sie elektrisch voneinander isoliert sind. Vorzugsweise handelt es sich bei der Beschichtung des Substrats 8 um die gleiche metallische Beschichtung 3, mit welcher auch das Quellelement 2 beschichtet ist. Dies ist besonders effektiv, wenn das Quellelement 2 nur einseitig beschichtet wird, da Substrat 8 und Quellelement 2 dann in einem gemeinsamen Verfahrensschritt beschichtet werden können. Auf den beiden metallisierten Abschnitten ist je eine elektrische Zuleitung 9 angebracht, beispielsweise an einem Lötpunkt oder auf einem Kontaktpad. An die elektrischen Zuleitungen 9 angeschlossen ist die Spannungsquelle zur Versorgung der metallischen Beschichtung 3 des Quellelements 2 mit einem Heizstrom.

Fig. 3b zeigt einen im Wesentlichen gleichen Aufbau wie Fig. 3a. An Stelle eines einzelnen Quellelements 2 sind hier zur Erhöhung der Strahlungsintensität zwei Quellelemente 2 oberhalb der Ausnehmung 81 im Substrat 8 angeordnet. Die Anzahl der Quellelemente 2 ist jedoch nicht auf eins oder zwei beschränkt. Das Substrat 8 kann für eine beliebige Anzahl an Quellelementen 2 als Träger dienen. Durch die Anordnung mehrerer Quellelemente 2 nebeneinander, vorzugsweise parallel zueinander, ist eine flächige Abstrahlcharakteristik erzielbar.

In Fig. 3c ist eine alternative Ausführungsform mit einem rechteckigen Substrat 8 dargestellt, welches eine ovale, mittig in das Substrat 8 eingebrachte Ausnehmung 81 aufweist. Auch hier ist das Quellelement 2 über der Ausnehmung 81 angeordnet. Die Endbereiche des Quellelements 2 enden auf dem Substrat 8, wo sie fixiert sind. Die Fixierung beschränkt sich vorzugsweise auf einen kleinen Bereich, statt flächig ausgeführt zu sein. Beispielsweise besteht die Fixierung aus einem Glastropfen. Die Kontaktierung erfolgt wie in Fig. 3a oder 3b über das Substrat 8. In einer alternativen Ausgestaltung sind die elektrischen Zuleitungen 9 direkt mit den Endbereichen des Quellelements 2 verbunden. Diese Kontaktierungsvariante ist gleichermaßen für die Ausführungsformen gemäß Fig. 3a oder 3b möglich.

Fig. 3d zeigt eine zu der Ausführungsform aus Fig. 3c ähnliche Ausgestaltung, wobei drei beschichtete Quellelemente 21 parallel zueinander über der Ausnehmung 81 in dem Substrat 8 angeordnet sind. Da die beschichteten Quellelemente 21 vorzugsweise alle mit derselben Spannungsquelle verbunden sind, ist eine Kontaktierung über eine Beschichtung des Substrats 8 vorteilhaft. Es sind dann nur zwei elektrische Kontaktleitungen erforderlich.

### Bezugszeichenliste

- 1: Strahlungsquelle
- 2: Quellelement
- 21: Beschichtetes Quellelement
- 3: Metallische Beschichtung
- 4: Zwischenschicht
- 5: Halterungselement
- 51: Lötstelle
- 6: Kopfteil
- 61: Basisplatte
- 62: Isolierendes Material
- 7: Transmissionsfenster
- 8: Substrat
- 81: Ausnehmung
- 9: Elektrische Zuleitung

## Patentansprüche

1. Strahlungsquelle (1) zur Emission infraroter elektromagnetischer Strahlung, mit mindestens einem Quellelement (2) und einer Spannungsquelle,
wobei das Quellelement (2) als Faser aus Siliziumcarbid ausgestaltet ist,
**dadurch gekennzeichnet,**
**dass** das Quellelement (2) mit seinen Endbereichen jeweils an einem Halterungselement (5) befestigt ist,
**dass** das Quellelement (2) in ein Gehäuse eingebracht ist,
**dass** die Halterungselemente (5) aus einem elektrisch leitfähigen Material bestehen und derart ausgestaltet sind, dass die metallische Beschichtung (3) des Quellelements (2) über die Halterungselemente (5) über die Spannungsquelle, welche an an die Halterungselemente (5) angeschlossen ist mit einer elektrischen Spannung beaufschlagbar ist,
**dass** das Quellelement (2) zumindest abschnittsweise mit einer metallischen Beschichtung (3) beschichtet ist, über welche das Quellelement (2) beheizbar ist, wobei die metallische Beschichtung (3) aus Platin oder einer Platinlegierung besteht und
**dass** die metallische Beschichtung (3) dazu ausgestaltet ist, das Quellelement (2) beim Anlegen einer Spannung an die metallische Beschichtung zumindest zeitweise derart zu erhitzen, dass das Quellelement (2) zumindest zeitweise Infrarotstrahlung emittiert.

2. Strahlungsquelle (1) nach Anspruch 1,
**dadurch gekennzeichnet,**
**dass** die Faser aus Siliziumcarbid einen Durchmesser unterhalb 300 Mikrometer aufweist.

3. Strahlungsquelle (1) nach einem der vorangehenden Ansprüche,
**dadurch gekennzeichnet,**
**dass** die metallische Beschichtung (3) eine Dicke zwischen 300 und 2000 Nanometer aufweist.

4. Strahlungsquelle (1) nach einem der vorangehenden Ansprüche,
**dadurch gekennzeichnet,**
**dass** das Quellelement (2) auf ein Substrat (8) aufgebracht ist.

5. Strahlungsquelle (1) nach einem der vorangehenden Ansprüche,
**dadurch gekennzeichnet,**
**dass** das Substrat (8) mindestens eine durchgängige Ausnehmung (81) aufweist,
und
**dass** das Quellelement (2) zumindest abschnittsweise oberhalb der Ausnehmung (81) angeordnet ist, sodass das Quellelement (2) zumindest durch die Ausnehmung (81) hindurch Strahlung emittiert.

6. Strahlungsquelle (1) nach einem der Ansprüche 1-5,
**dadurch gekennzeichnet,**
**dass** die metallische Beschichtung (3) einseitig auf das Quellelement (2) aufgebracht ist, sodass ein entlang einer Mantellinie verlaufender Abschnitt des Quellelements (2) frei von der Beschichtung ist.

7. Verfahren zur Herstellung einer Strahlungsquelle (1) nach Anspruch 1,
**dadurch gekennzeichnet,**
**dass** mindestens eine Faser aus Siliziumcarbid an mindestens zwei Befestigungspunkten auf ein Substrat (8) aufgebracht wird, dass die Faser und zumindest zwei Abschnitte des Substrats (8), in welchen die Befestigungspunkte liegen, mit einer metallischen Beschichtung beschichtet werden,
und
**dass** die zwei Abschnitte des Substrats (8), welche mit der metallischen Beschichtung beschichtet sind, mit elektrischen Zuleitungen (9) kontaktiert werden, sodass eine elektrische Spannung an die metallische Beschichtung der Faser anlegbar ist.

8. Gassensor zur Analyse eines Gasgemisches und/oder Erfassung eines oder mehrerer Gase, welcher mindestens eine Strahlungsquelle nach einem oder mehreren der Ansprüche 1-6 aufweist.

9. Gassensor nach Anspruch 8, **dadurch gekennzeichnet,**
**dass** der Gassensor dazu ausgestaltet ist, zumindest eines der Gase Kohlendioxid, Ethanol, Ammoniak und Methan zu messen.

## Claims

1. Radiation source (1) for emitting infrared electromagnetic radiation with at least one source element (2) and a voltage source, wherein the source element (2) is designed as a fiber made from silicon carbide,
**characterized in that**
the source element (2) is secured on a retaining element (5) at each of its end sections,
the source element (2) is accommodated in a housing,
the retaining elements (5) are made from an electrically conductive material and are designed in such a way that the metal coating (3) of the source element (2) can be exposed to an electrical voltage by means of the retaining elements (5) via the voltage source, which is connected to the retaining elements (5),
the source element (2) is coated at least partially with a metal coating (3) by means of which the source element (2) can be heated, wherein the metal coating (3) is made from platinum or a platinum alloy,
and
**in that** the metal coating (3) is designed to at least intermittently heat the source element (2) when a voltage is applied to the metal coating in such a way that the source element (2) at least temporarily emits infrared radiation.

2. Radiation source (1) as claimed in Claim 1,
**characterized in that**
the fiber made from silicon carbide has a diameter of less than 300 micrometers.

3. Radiation source (1) as claimed in one of the previous claims,
**characterized in that**
the metal coating (3) has a thickness of between 300 and 2000 nanometers.

4. Radiation source (1) as claimed in one of the previous claims,
**characterized in that**
the source element (2) is fitted on a substrate (8).

5. Radiation source (1) as claimed in one of the previous claims,
**characterized in that**
the substrate (8) features at least one continuous cavity (81),
and
**in that** the source element (2) is arranged at least partially above the cavity (81), such that the source element (2) emits radiation at least through the cavity (81).

6. Radiation source (1) as claimed in one of the Claims 1 to 5,
**characterized in that**
the metal coating (3) is applied on the source element (2) on one side, such that a section of the source element (2) extending along a generatrix is free from the coating.

7. Method to produce a radiation source (1) as claimed in Claim 1,
**characterized in that**
at least one fiber made from silicon carbide is applied on a substrate (8) at at least two attachment points,
the fiber and at least two sections of the substrate (8) in which the attachment points are located are coated with a metal coating,
and
**in that** the two sections of the substrate (8) which are coated with the metal coating are in contact with electrical supply lines (9) such that an electrical voltage can be applied to the metal coating of the fiber.

8. Gas sensor for analyzing a gas mixture and/or detecting one or more gases, which has at least one radiation source as claimed in one or more of the Claims 1 to 6.

9. Gas sensor as claimed in Claim 8,
**characterized in that**
the gas sensor is designed to measure at least one of the following gases: carbon dioxide, ethanol, ammonia and methane.

## Revendications

1. Source de rayonnement (1) destinée à l'émission d'un rayonnement électromagnétique infrarouge avec au moins un élément source (2) et une source de tension, l'élément source (2) étant conçu en tant que fibre en carbure de silicium,
**caractérisée**
**en ce que** l'élément source (2) est fixé avec ses zones d'extrémité respectivement à un élément de fixation (5),
**en ce que** l'élément source (2) est logé dans un boîtier,
**en ce que** les éléments de fixation (5) sont constitués d'un matériau électriquement conducteur et sont conçus de telle sorte que le revêtement métallique (3) de l'élément source (2) puisse être soumis à une tension électrique par l'intermédiaire des éléments de fixation (5) via la source de tension, laquelle est raccordée aux éléments de fixation (5),
**en ce que** l'élément source (2) est revêtu au moins partiellement avec un revêtement métallique (3), par l'intermédiaire duquel l'élément source (2) peut être chauffé, le revêtement métallique (3) étant constitué de platine ou d'un alliage de platine,
et
**en ce que** le revêtement métallique (3) est conçu de manière à échauffer au moins partiellement l'élément source (2), lors de l'application d'une tension au revêtement métallique, si bien que l'élément source (2) émet au moins temporairement un rayonnement infrarouge.

2. Source de rayonnement (1) selon la revendication 1,
**caractérisée**
**en ce que** la fibre en carbure de silicium présente un diamètre inférieur à 300 micromètres.

3. Source de rayonnement (1) selon l'une des revendications précédentes,
**caractérisée**
**en ce que** le revêtement métallique (3) présente une épaisseur comprise entre 300 et 2 000 nanomètres.

4. Source de rayonnement (1) selon l'une des revendications précédentes,
**caractérisée**
**en ce que** l'élément source (2) est appliqué sur un substrat (8).

5. Source de rayonnement (1) selon l'une des revendications précédentes,
**caractérisée**
**en ce que** le substrat (8) présente au minimum une cavité traversante (81),
et
**en ce que** l'élément source (2) est disposé au moins partiellement sur la cavité (81), si bien que l'élément source (2) émet un rayonnement au moins à travers la cavité (81).

6. Source de rayonnement (1) selon l'une des revendications 1 à 5,
**caractérisée**
**en ce que** le revêtement métallique (3) est appliqué d'un côté sur l'élément source (2), si bien qu'une partie - s'étendant le long d'une génératrice - de l'élément source (2) est exempte de revêtement.

7. Procédé destiné à la fabrication d'une source de rayonnement (1) selon la revendication 1,
**caractérisé**
**en ce qu'**est appliquée au moins une fibre en carbure de silicium sur au moins deux points de fixation sur un substrat (8),
**en ce que** la fibre et au moins deux parties du substrat (8), dans lesquelles se situent les points de fixation, sont revêtues d'un revêtement métallique,
et
**en ce que** les deux parties du substrat (8), lesquelles sont revêtues avec le revêtement métallique, sont mises en contact avec des conducteurs électriques (9), si bien qu'une tension électrique peut être appliquée au revêtement métallique de la fibre.

8. Capteur de gaz destiné à l'analyse d'un mélange gazeux et/ou à la mesure d'un ou de plusieurs gaz, lequel capteur comprend au moins une source de rayonnement selon l'une ou plusieurs des revendications 1 à 6.

9. Capteur de gaz selon la revendication 8,
**caractérisé**
**en ce que** le capteur de gaz est destiné à mesurer au moins l'un des gaz suivants : dioxyde de carbone, éthanol, ammoniac et méthane.
